# EUROPEAN PATENT APPLICATION

(11) **EP 4 664 942 A1**
(43) Date of publication of application: **17.12.2025**
(21) Application number: 24861512.2
(22) Date of filing: 25.04.2024
(51) Int. Cl.: H04W 4/48

(54) **CONTROL METHOD AND APPARATUS, AND VEHICLE**

(30) Priority: 05.09.2023 CN 202311142569
(71) Applicant: Guangzhou Automobile Group Co., Ltd., Guangzhou, Guangdong 511434 (CN)
(72) Inventor: FAN, Jiabao, Guangzhou, Guangdong 511434 (CN); YAO, Ang, Guangzhou, Guangdong 511434 (CN); HE, Lieyan, Guangzhou, Guangdong 511434 (CN); GUO, Songxin, Guangzhou, Guangdong 511434 (CN); LIU, Guangda, Guangzhou, Guangdong 511434 (CN); HUANG, Shengli, Guangzhou, Guangdong 511434 (CN)
(74) Representative: Metida
(86) International application number: PCT/CN2024/089897
(87) International publication number: WO 2025/050662

(57) **Abstract**

Disclosed in embodiments of the present application are a control method and device, and a vehicle. The method includes: when the vehicle is in a power-off state, determining, by a vehicle controller, whether network wake-up variables are in valid states, recording a wake-up parameter corresponding to a network wake-up variable in a valid state, and if the wake-up parameter of the network wake-up variable in the valid state is greater than or equal to a corresponding threshold, setting the network wake-up variable in the valid state to an invalid state. In the above way, when the wake-up parameter of the network wake-up variable in the valid state is greater than or equal to the corresponding threshold, it may indicate an abnormal operation by a vehicle owner/a pedestrian, and a failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle.

## Description

### CROSS-REFERENCE TO RELATED APPLICATIONS

This application claims priority to Chinese Patent Application No. 202311142569.7, filed with the China National Intellectual Property Administration on September 5, 2023 and entitled "CONTROL METHOD AND DEVICE, AND VEHICLE", the entire contents of which are incorporated herein by reference.

### FIELD OF TECHNOLOGY

The present application relates to the technical field of vehicles, and more specifically, to a control method and device, and a vehicle.

### BACKGROUND

With the development of vehicle technology, vehicle functions have become increasingly complex, and vehicles are becoming more intelligent and connected. As a result, even when the vehicle is in a power-off state, there are still various network wake-up variables that can wake up the entire vehicle network, such as remote vehicle control, remote panoramic viewing, and vehicle tapping to trigger a "sentry mode". The network wake-up variables may wake up multiple controllers of the complete vehicle. If the number of wake-ups is too large or the wake-up time is too long, it may lead to battery drain of the vehicle, causing the vehicle to fail to start normally. In related approaches, the power of the vehicle controller can be monitored, and when abnormal power is detected, power control can be promptly performed on the vehicle controller to prevent battery drain of the vehicle. However, the anti-battery-drain capability of related approaches still needs improvement.

### SUMMARY

In view of the above problems, the present application proposes a control method and device, and a vehicle, to improve the above problems.

In a first aspect, the present application provides a control method, including: determining, when a vehicle is in a power-off state, by a vehicle controller, whether network wake-up variables are in valid states, and recording a wake-up parameter corresponding to a network wake-up variable in a valid state, where the wake-up parameter includes at least one of total wake-up duration or a total wake-up count; and if the wake-up parameter of the network wake-up variable in the valid state is greater than or equal to a corresponding threshold, setting the network wake-up variable in the valid state to an invalid state, so that the vehicle controller does not respond to a wake-up from the network wake-up variable in the invalid state.

In a second aspect, the present application provides a control device, including: a parameter acquisition unit, configured to determine, when a vehicle is in a power-off state, by a vehicle controller, whether network wake-up variables are in valid states, and record a wake-up parameter corresponding to a network wake-up variable in a valid state, where the wake-up parameter comprises at least one of total wake-up duration or a total wake-up count; and a parameter modification unit, configured to set the network wake-up variable in the valid state to an invalid state if the wake-up parameter of the network wake-up variable in the valid state is greater than or equal to a corresponding threshold, so that the vehicle controller does not respond to a wake-up from the network wake-up variable in the invalid state.

In a third aspect, the present application provides a vehicle controller, including a processor and a memory, where one or more programs are stored in the memory and configured to be executed by the processor, and the one or more programs are configured to perform the above method.

In a fourth aspect, the present application provides a vehicle, including one or more vehicle controllers as above.

In a fifth aspect, the present application provides a computer-readable storage medium, storing program codes, where the above method is performed when the program codes are executed.

According to the control method and device, the vehicle, and the storage medium provided in the present application, when the vehicle is in the power-off state, the vehicle controller can determine whether the network wake-up variables are in the valid states, and record at least one wake-up parameter in the corresponding total wake-up duration or total wake-up count of the network wake-up variable in the valid state, and if the wake-up parameter of the network wake-up variable in the valid state is greater than or equal to the corresponding threshold, the network wake-up variable in the valid state is set to the invalid state, so that the vehicle controller does not respond to the wake-up from the network wake-up variable in the invalid state. In the above way, when the wake-up parameter of the network wake-up variable in the valid state is greater than or equal to the corresponding threshold, the network wake-up variable in the valid state can be set to the invalid state, so that the vehicle controller no longer responds to the network wake-up variable in the valid state. When the wake-up parameter of the network wake-up variable in the valid state is greater than or equal to the corresponding threshold, it may indicate an abnormal operation by a vehicle owner/a pedestrian, and a software exception, a mechanical failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle in the scenarios such as the abnormal operation by the vehicle owner/the pedestrian, and the software exception, the mechanical failure or the like of the vehicle controller. Moreover, each vehicle controller can perform relevant control based on the states of its own network wake-up variables, thereby improving control flexibility.

### BRIEF DESCRIPTION OF THE DRAWINGS

To more clearly illustrate the technical solutions in the embodiments of the present application, the accompanying drawings that need to be used in the description of the embodiments will be briefly introduced below. Apparently, the accompanying drawings in the description below merely illustrate some embodiments of the present application. Those skilled in the art can also derive other accompanying drawings from these accompanying drawings without creative efforts.
FIG. 1 shows a flowchart of a control method according to an embodiment of the present application;
FIG. 2 shows a schematic diagram of a wake-up source of a vehicle controller according to the present application;
FIG. 3 shows a schematic diagram of mode switching of a vehicle controller according to the present application;
FIG. 4 shows a flowchart of a control method according to another embodiment of the present application;
FIG. 5 shows a schematic diagram of a basic process according to the present application;
FIG. 6 shows a structural block diagram of a control device according to an embodiment of the present application; and
FIG. 7 shows a structural block diagram of a vehicle according to the present application.

### DESCRIPTION OF THE EMBODIMENTS

The technical solutions in the embodiments of the present application will be clearly and completely described below with reference to the accompanying drawings in the embodiments of the present application. All other embodiments obtained by those of ordinary skill in the art based on the embodiments in the present application without creative efforts shall fall within the scope of protection of the present application.

In the embodiments of the present application, the inventor proposes a control method and device, and a vehicle. When the vehicle is in a power-off state, a vehicle controller can determine whether network wake-up variables are in valid states, and record at least one wake-up parameter in a corresponding total wake-up duration or total wake-up count of a network wake-up variable in a valid state, and if the wake-up parameter of the network wake-up variable in the valid state is greater than or equal to a corresponding threshold, the network wake-up variable in the valid state is set to an invalid state, so that the vehicle controller does not respond to a wake-up from the network wake-up variable in the invalid state. In the above way, when the wake-up parameter of the network wake-up variable in the valid state is greater than or equal to the corresponding threshold, the network wake-up variable in the valid state can be set to the invalid state, so that the vehicle controller no longer responds to the network wake-up variable in the valid state. When the wake-up parameter of the network wake-up variable in the valid state is greater than or equal to the corresponding threshold, it may indicate an abnormal operation by a vehicle owner/a pedestrian, and a software exception, a mechanical failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle in the scenarios such as the abnormal operation by the vehicle owner/the pedestrian, and the software exception, the mechanical failure or the like of the vehicle controller. Moreover, each vehicle controller can perform relevant control based on the states of its own network wake-up variables, thereby improving control flexibility.

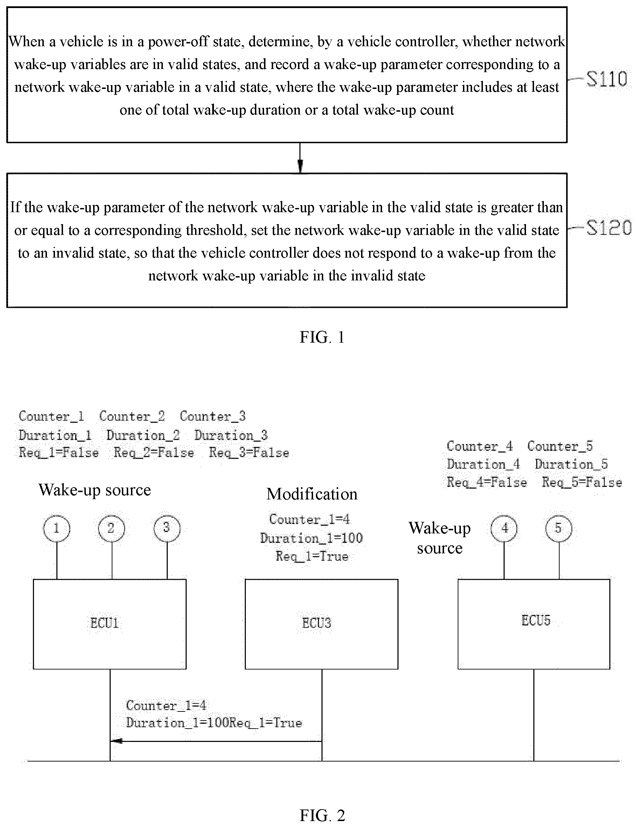

Referring to FIG. 1, a control method is provided in an embodiment of the present application, including the following steps.

In S110, when a vehicle is in a power-off state, a vehicle controller determines whether network wake-up variables are in valid states, and records a wake-up parameter corresponding to a network wake-up variable in a valid state, where the wake-up parameter includes at least one of total wake-up duration or a total wake-up count.

The vehicle may correspondingly have a power supply status, which may be a power-on state or a power-off state. When the vehicle is in the power-on state, it may indicate that a user is using the vehicle. When the vehicle is in the power-off state, it may indicate that the user does not use the vehicle.

The vehicle controller may refer to an electronic control unit (ECU), and may include a microcontroller unit (MCU) and one or more components. The microcontroller unit may be configured to control one or more components, so that the one or more components can implement different functions related to the vehicle controller. For example, in a vehicle controller for vehicle window control, there may be a power component. The power component can be controlled with the microcontroller unit to move the vehicle window.

The network wake-up variable may refer to a wake-up variable corresponding to a network wake-up source. The network wake-up source may refer to a wake-up source (such as a remote control instruction or a vehicle door handle) outside the vehicle controller.

As shown in FIG. 2, the vehicle controller may correspond to at least one wake-up source, and each wake-up source may correspond to a local wake-up variable or a network wake-up variable. The local wake-up variable may refer to a wake-up variable corresponding to a local wake-up source. The local wake-up source may refer to a wake-up source (such as a component) inside the vehicle controller. Each network wake-up variable may correspond to a wake-up parameter and a high-voltage request state value. The wake-up parameter may be at least one of the total wake-up duration and the total wake-up count. The total wake-up duration may refer to total duration for which the wake-up state of the corresponding network wake-up variable remains valid within one ignition cycle. The total wake-up count may refer to the total number of times the wake-up state of the corresponding network wake-up variable switches from invalid to valid within one ignition cycle. The high-voltage request state value may be used to identify whether the corresponding vehicle controller can send a high-voltage power-on request to the vehicle. When the vehicle receives the high-voltage power-on request, a high-voltage battery of the vehicle charges a storage battery of the vehicle, thereby ensuring that the vehicle is not at risk of battery drain currently.

As an approach, if the vehicle is in the power-off state, the vehicle controller may determine, based on the wake-up states of the network wake-up variables corresponding to the vehicle controller, the network wake-up variable in the valid state, and then start to acquire the wake-up parameter of the network wake-up variable in the valid state.

Optionally, if the microcontroller unit receives a wake-up request from the network wake-up variable, the microcontroller unit may set the wake-up state of the network wake-up variable to valid and determine the network wake-up variable as the network wake-up variable in the valid state.

Optionally, the microcontroller unit may start a timer to begin timing when the wake-up state of the network wake-up variable in the valid state changes from invalid to valid, and stop timing when the wake-up state of the network wake-up variable in the valid state changes from valid to invalid. A timing duration of the current timer is used as current total wake-up duration of the network wake-up variable in the valid state.

Optionally, after the wake-up source corresponding to the network wake-up variable in the valid state is triggered, the microcontroller unit may wait for a preset time and monitor whether the wake-up source is triggered after the preset time. If the wake-up source is not triggered, the wake-up state of the network wake-up variable in the valid state may change from valid to invalid. If the wake-up source is triggered again, the wake-up state of the network wake-up variable in the valid state may continue being set as valid. The preset time for different wake-up sources may be different, and the preset time for each wake-up source may be obtained based on multiple tests.

Optionally, the microcontroller unit may add 1 to the total wake-up count when the wake-up state of the network wake-up variable in the valid state changes from invalid to valid.

By way of example, the wake-up source corresponding to the network wake-up variable in the valid state may be a vehicle door handle, and the preset time for the vehicle door handle may be 2 s. When the vehicle door handle is pulled up, it indicates that the wake-up source is triggered. At this time, the wake-up state of the network wake-up variable in the valid state can be changed from invalid to valid, 1 can be added to the total wake-up count, and the timer can be started to begin timing. If the vehicle door handle is not in a pulled-up state after 2 s, the wake-up state of the network wake-up variable in the valid state can be changed from valid to invalid and timing is stopped. If the vehicle door handle is in the pulled-up state after 2 s, timing can continue until the wake-up state of the network wake-up variable in the valid state is changed from valid to invalid.

As an approach to acquire the power supply status of the vehicle, the vehicle controller may acquire the power supply status of the vehicle in response to the vehicle controller being in a working mode.

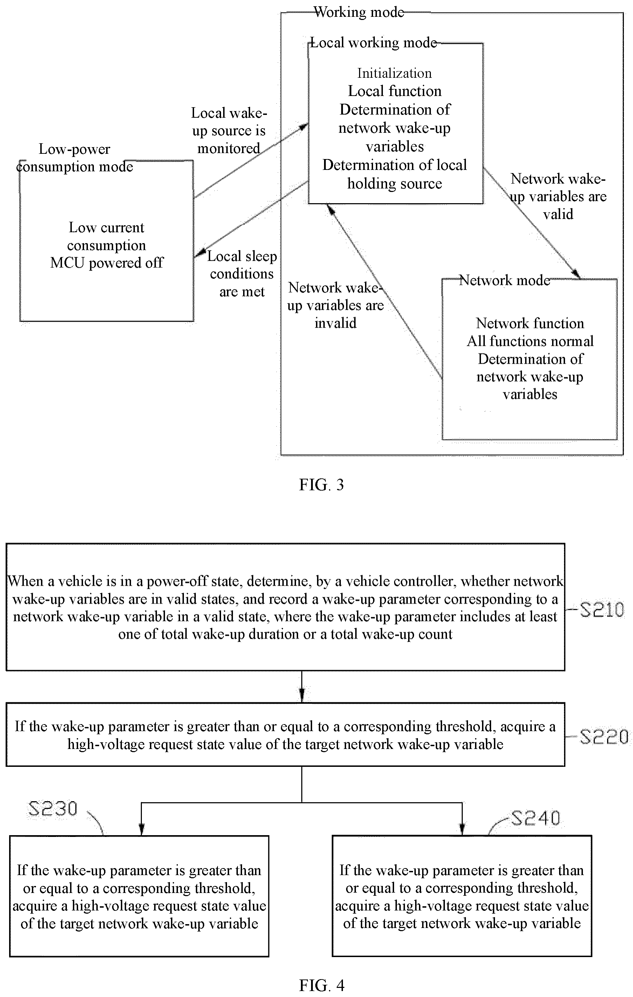

In this embodiment of the present application, as shown in FIG. 3, the vehicle controller may be in a working mode or a low-power mode. When the vehicle controller is in the working mode, the working mode may be in a local mode or a network mode. The low-power mode may refer to a working mode in which the vehicle controller operates in a low-power manner at all times. Typically, when the vehicle is in a long-term stationary state, the vehicle controller can operate in the low-power mode, so that the vehicle does not consume excessive power during long-term parking and thus can be started normally. The network mode may refer to a working mode in which the vehicle controller needs to communicate with other vehicle controllers in the vehicle. In the network mode, the vehicle controller will send out a network message. The local mode may refer to a working mode in which the vehicle controller only controls its own internal components. Therefore, whether the vehicle controller is currently in the network mode or the local mode can be determined based on whether the vehicle controller sends out the network message.

Moreover, when the vehicle controller is in the local mode and no target event is monitored, in order to save power, the vehicle controller may automatically switch to the low-power mode after performing all processes in the local mode. The target event may refer to an event that extends duration of the vehicle controller being in the local mode (such as monitoring of the local wake-up variable) or an event that causes the vehicle controller to switch from the local mode to the network mode (such as monitoring of the network wake-up variable in the valid state). The local wake-up variable may refer to a wake-up variable corresponding to the local wake-up source, and the network wake-up variable in the valid state may refer to a wake-up variable corresponding to the network wake-up source. The local wake-up source may refer to a wake-up source (such as a component) inside the vehicle controller, and the network wake-up source may refer to a wake-up source (such as a remote control instruction or a vehicle door handle) outside the vehicle controller. When the vehicle controller is in the local mode and the network wake-up variable in the valid state is monitored, the vehicle controller can switch from the local mode to the network mode and wake up other vehicle controllers of the entire vehicle, so that the other vehicle controllers of the entire vehicle also enter the network mode. When the vehicle controller is in the low-power mode and the local wake-up variable is monitored, the vehicle controller can switch from the low-power mode to the local mode.

Optionally, the power supply status of the vehicle may be acquired based on a power status or a key status of the vehicle.

The power status may be represented as IGNOFF, IGNON, or ACC. The key status may refer to a state of a mechanical key. The key status may be represented as CRANKING, IGNON, IGNOFF, or ACC.

Optionally, the vehicle controller may be connected to a hardwire (such as a KL30 wire), so that the microcontroller unit can determine the power status or the key status based on a high level or a low level acquired via the hardwire.

Optionally, the vehicle controller may be connected to a controller area network (CAN) bus, so that the microcontroller unit can determine the power status or the key status based on keystatus signals transmitted by other controllers on the CAN bus.

In S 120, if the wake-up parameter of the network wake-up variable in the valid state is greater than or equal to a corresponding threshold, the network wake-up variable in the valid state is set to an invalid state, so that the vehicle controller does not respond to a wake-up from the network wake-up variable in the invalid state.

A threshold corresponding to the total wake-up count may be a first threshold, and a threshold corresponding to the total wake-up duration may be a second threshold.

As an approach, when the wake-up parameter is the total wake-up count, if the total wake-up count is greater than or equal to the first threshold, the microcontroller unit may set the network wake-up variable in the valid state to the invalid state.

As another approach, when the wake-up parameter is the total wake-up duration, if the total wake-up duration is greater than or equal to the second threshold, the microcontroller unit may set the network wake-up variable in the valid state to the invalid state.

As yet another approach, when the wake-up parameter includes the total wake-up count and the total wake-up duration, if the total wake-up count is greater than or equal to the first threshold and the total wake-up duration is greater than or equal to the second threshold, the microcontroller unit may set the network wake-up variable in the valid state to the invalid state.

In this embodiment of the present application, there may be various approaches to determine the wake-up parameter of the network wake-up variable in the valid state.

As an approach to determine the wake-up parameter, the wake-up parameter of the network wake-up variable in the valid state may be determined based on a mapping relationship list, which includes network wake-up variables corresponding to all vehicle controllers on the vehicle and preset wake-up parameters of all the network wake-up variables.

As another approach to determine the wake-up parameter, the wake-up parameter may be determined based on the type of the wake-up source corresponding to the network wake-up variable in the valid state. If the type of wake-up source is a first type, the wake-up parameter of the network wake-up variable in the valid state may be the total wake-up duration; if the type of wake-up source is a second type, the wake-up parameter of the network wake-up variable in the valid state may be the total wake-up count; and if the type of wake-up source is a third type, the wake-up parameter of the network wake-up variable in the valid state may include the total wake-up duration and the total wake-up count.

The first type may refer to a wake-up source whose wake-up state remains valid for duration greater than or equal to a specified duration after being triggered; the second type may refer to a wake-up source whose probability of being triggered again within a specified time period after being triggered for the first time is greater than or equal to a specified probability; and the third type may refer to a wake-up source whose wake-up state remains valid for duration less than a specified duration after being triggered, or whose probability of being triggered again within a specified time period after being triggered for the first time is less than a specified probability.

According to the control method provided in this embodiment, when the vehicle is in the power-off state, the vehicle controller can determine whether the network wake-up variables are in the valid states, and record at least one wake-up parameter in the corresponding total wake-up duration or total wake-up count of the network wake-up variable in the valid state, and if the wake-up parameter of the network wake-up variable in the valid state is greater than or equal to the corresponding threshold, the network wake-up variable in the valid state is set to the invalid state, so that the vehicle controller does not respond to the wake-up from the network wake-up variable in the invalid state. In the above way, when the wake-up parameter of the network wake-up variable in the valid state is greater than or equal to the corresponding threshold, the network wake-up variable in the valid state can be set to the invalid state, so that the vehicle controller no longer responds to the network wake-up variable in the valid state. When the wake-up parameter of the network wake-up variable in the valid state is greater than or equal to the corresponding threshold, it may indicate an abnormal operation by a vehicle owner/a pedestrian, and a software exception, a mechanical failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle in the scenarios such as the abnormal operation by the vehicle owner/the pedestrian, and the software exception, the mechanical failure or the like of the vehicle controller. Moreover, each vehicle controller can perform relevant control based on the states of its own network wake-up variables, thereby improving control flexibility.

Referring to FIG. 4, a control method provided in an embodiment of the present application includes the following steps.

In S210, when a vehicle is in a power-off state, a vehicle controller determines whether network wake-up variables are in valid states, and records a wake-up parameter corresponding to a network wake-up variable in a valid state, where the wake-up parameter includes at least one of total wake-up duration or a total wake-up count.

When the wake-up parameter is the total wake-up count, as an approach, within one ignition cycle, when the vehicle is in the power-off state, the vehicle controller switches from the invalid state to the valid state in response to the network wake-up variables, and 1 is added to the total wake-up count of the network wake-up variable in the valid state, where the total wake-up count is not changed during a period in which the current valid state is maintained.

Optionally, within one ignition cycle, if the total wake-up count is less than the first threshold, it can be confirmed whether the network wake-up variable in the valid state is currently still in the valid state, and it can be confirmed whether the vehicle is currently in the power-off state; if the vehicle is currently in the power-on state, it may indicate that the ignition cycle ends and the vehicle exits an anti-battery-drain control process, and the total wake-up count may be set to 0 to await the next ignition cycle; and if the vehicle is currently in the power-off state and the current wake-up state of the network wake-up variable in the valid state is invalid, it may indicate that the ignition cycle does not end, and the current total wake-up count may be saved to wait for the wake-up state of the network wake-up variable in the valid state to switch from invalid to valid again within the ignition cycle.

One ignition cycle may refer to a time period from a moment when the vehicle switches from the power-on state to the power-off state, to a moment when the vehicle switches from the power-off state to the power-on state.

By way of example, within the ignition cycle, the current total wake-up count may be 4. When the vehicle is currently in the power-off state and the current wake-up state of the network wake-up variable in the valid state is invalid, the current total wake-up count may be saved. When the wake-up state of the network wake-up variable in the valid state switches from invalid to valid again within the ignition cycle, the total wake-up count may be 5.

When the wake-up parameter is the total wake-up duration, as an approach, within one ignition cycle, when the vehicle is in the power-off state, the vehicle controller determines whether the network wake-up variables are in the valid states, and starts, when confirming that the network wake-up variable in the valid state exists, timing to acquire current wake-up duration of the network wake-up variable in the valid state within the ignition cycle, where the current wake-up duration is duration for which the network wake-up variable remains in the valid state; and based on initial wake-up duration and the current wake-up duration, the total wake-up duration is obtained, where the initial wake-up duration is total wake-up duration when the vehicle controller last received a wake-up request from the network wake-up variable in the valid state within the ignition cycle.

Optionally, within one ignition cycle, if the total wake-up duration is less than the second threshold, it can be confirmed whether the network wake-up variable in the valid state is currently still in the valid state, and it can be confirmed whether the vehicle is currently in the power-off state; if the vehicle is currently in the power-on state, it may indicate that the ignition cycle ends and the vehicle exits the anti-battery-drain control process, so that timing can be stopped, and the total wake-up duration can be set to 0 to await the next ignition cycle; and if the vehicle is currently in the power-off state and the current wake-up state of the network wake-up variable in the valid state is invalid, timing is stopped, and it may indicate that the ignition cycle does not end, so that the total wake-up duration can be used as the initial wake-up duration within the ignition cycle to wait for the wake-up state of the network wake-up variable in the valid state to switch from invalid to valid again within the ignition cycle.

In this embodiment of the present application, there may be various approaches to determine the first threshold and the second threshold.

As an approach to determine the thresholds, the first threshold and the second threshold may be determined based on an aging degree of the storage battery. The higher the aging degree of the storage battery is, the smaller the first threshold and the second threshold may be.

As another approach to determine the thresholds, the first threshold and the second threshold may be determined based on dark current characteristics.

As yet another approach to determine the thresholds, the first threshold and the second threshold may be determined by the user. The user may set the first threshold and the second threshold through a threshold setting interface accessed via a user terminal or a central control screen of the vehicle.

As a further approach to determine the thresholds, the first threshold and the second threshold may be determined by other vehicle controllers. The other vehicle controllers may send threshold update instructions to the vehicle controller implementing the control method in the present application, and the threshold update instructions may be used to modify the first threshold and the second threshold of the vehicle controller implementing the control method in the present application.

Optionally, when the vehicle controller implementing the control method in the present application receives multiple threshold update instructions at the same time, a target threshold update instruction may be determined based on priorities of the vehicle controllers corresponding to the multiple threshold update instructions, and the target threshold update instruction is executed. The target threshold update instruction may be a threshold update instruction sent by the vehicle controller with the highest priority.

Optionally, the first threshold and the second threshold may be changed at any time.

Optionally, within one ignition cycle, in response to the vehicle controller being in the working mode, the anti-battery-drain control process can be entered, followed by acquiring the power supply status of the vehicle.

In S220, if the wake-up parameter is greater than or equal to the corresponding threshold, a high-voltage request state value of the network wake-up variable in the valid state is acquired.

The high-voltage request state value may be used to identify whether the corresponding vehicle controller can send a high-voltage power-on request to the vehicle. When the vehicle receives the high-voltage power-on request, a high-voltage battery of the vehicle charges the storage battery of the vehicle, thereby ensuring that the vehicle is not at risk of battery drain currently.

As an approach, if the wake-up parameter is greater than or equal to the corresponding threshold, the high-voltage request state value of the network wake-up variable in the valid state may be acquired through a state value mapping table. The state value mapping table may include high-voltage request state values corresponding to all network wake-up variables.

The high-voltage request state value may be a first target value or a second target value. By way of example, the first target value may be False, and the second target value may be True.

In this embodiment of the present application, the user corresponding to the vehicle may customize the high-voltage request state value corresponding to each network wake-up variable based on a requirement.

In this embodiment of the present application, the high-voltage request state value of the corresponding network wake-up variable may be determined based on a trigger mode of the wake-up source corresponding to the network wake-up variable. If the trigger mode of the wake-up source corresponding to the network wake-up variable is non-remote trigger, the high-voltage request state value corresponding to the network wake-up variable may be determined as the first target value; and if the trigger mode of the wake-up source corresponding to the network wake-up variable is remote trigger, the high-voltage request state value corresponding to the network wake-up variable may be determined as the second target value.

By way of example, when the user pulls up the vehicle door handle while standing by a vehicle door, the high-voltage request state value of the corresponding network wake-up variable may be set to the first target value; and when vehicle lights are remotely controlled to be turned on via a mobile phone-related application, the high-voltage request state value of the corresponding network wake-up variable may be set to the second target value.

In this embodiment of the present application, as shown in Table 1, an identifier corresponding to each network wake-up variable, the first threshold, the second threshold, the total wake-up count, the total wake-up duration, and the high-voltage request state value may be stored associatively.

**Table 1**

| Controller | Identifier of network wake-up variable | First threshold | Total wake-up count | Second threshold (min) | Total wake-up duration (min) | High-voltage request state value |
|---|---|---|---|---|---|---|
| ECU_ab | Wakeu pSource_a | α_a | Counter_a | β- | Duration_a | Req_a |
| | Wakeu pSource_b | α_b | Counter_b | β- | Duration_b | Req_b |
| ECU_cd | Wakeu pSource_c | α_c | Counter_c | β- | Duration_c | Req_c |
| | Wakeu pSource_d | α_d | Counter_d | β_ | Duration_d | Req_d |
| ... | | | | | | |

In S230, the network wake-up variable in the valid state is set to the invalid state if the high-voltage request state value is a first target value.

As an approach, if the high-voltage request state value is the first target value, the wake-up state of the network wake-up variable in the valid state may be set to invalid. The identifier and the wake-up parameter of the network wake-up variable in the valid state are sent to an Internet-of-Vehicles server, and a prompt message is sent to the user terminal (such as a mobile phone, a computer, or a tablet). The prompt message can be used to inform the user that the network wake-up variable is abnormal, so that the Internet-of-Vehicles server can promptly perform fault diagnosis in response to the received identifier and wake-up parameter of the network wake-up variable in the valid state, and remind the user of possible improper vehicle usage behaviors.

By way of example, when the wake-up parameter of the network wake-up variable in the valid state that corresponds to the vehicle door handle exceeds the corresponding threshold within one ignition cycle, it can be considered an abnormal operation by a non-vehicle owner, such as vehicle theft by a thief or a prank by a child. Therefore, the network wake-up variable in the valid state can be set to the invalid state, so that within the ignition cycle, the network wake-up variable in the valid state cannot wake up the corresponding vehicle controller, thereby preventing the vehicle controller from entering the network mode due to a change in the wake-up state of the network wake-up variable in the valid state, and further preventing other vehicle controllers from being woken up by this vehicle controller.

In S240, if the high-voltage request state value is a second target value, a high-voltage request signal is sent to enable a storage battery of the vehicle to be in a charging state, and the wake-up parameter is set to 0.

As an approach, if the high-voltage request state value is the second target value, the high-voltage request signal can be sent to enable the storage battery of the vehicle to be in the charging state, and the wake-up parameter can be set to 0.

By way of example, when the wake-up parameter of the network wake-up variable in the valid state that corresponds to the vehicle lights exceeds the corresponding threshold within one ignition cycle, it can be considered that the vehicle owner needs to use the vehicle lights for illumination. Therefore, the high-voltage request signal can be sent, so that the storage battery of the vehicle is in the charging state within the ignition cycle, thereby avoiding battery drain caused by repeated or long-term use of the vehicle lights for illumination by the vehicle owner; and the wake-up parameter is set to 0, thereby avoiding incorrect estimation of the wake-up parameter of the network wake-up variable in the valid state within the next ignition cycle.

Optionally, within one ignition cycle, in response to the vehicle controller being in the working mode, the anti-battery drain control process can be entered, followed by acquiring the power supply status of the vehicle. If the vehicle is in the power-on state, it indicates the end of the ignition cycle, so that the anti-battery drain control process can be exited.

According to the control method provided in this embodiment, in the above way, when the wake-up parameter of the network wake-up variable in the valid state is greater than or equal to the corresponding threshold, the network wake-up variable in the valid state can be set to the invalid state, so that the vehicle controller no longer responds to the network wake-up variable in the valid state. When the wake-up parameter of the network wake-up variable in the valid state is greater than or equal to the corresponding threshold, it may indicate an abnormal operation by a vehicle owner/a pedestrian, and a software exception, a mechanical failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle in the scenarios such as the abnormal operation by the vehicle owner/the pedestrian, and the software exception, the mechanical failure or the like of the vehicle controller. Moreover, each vehicle controller can perform relevant control based on the states of its own network wake-up variables, thereby improving control flexibility. Furthermore, in this embodiment, when the wake-up parameter of the network wake-up variable in the valid state is greater than or equal to the corresponding threshold, whether the vehicle controller continues responding to the network wake-up variable in the valid state is determined based on the high-voltage request state value of the network wake-up variable in the valid state, thereby improving the flexibility of anti-battery drain control, and enhancing user experience.

To better understand the solutions of all embodiments of the present application, a basic process of the control method in the present application is described below.

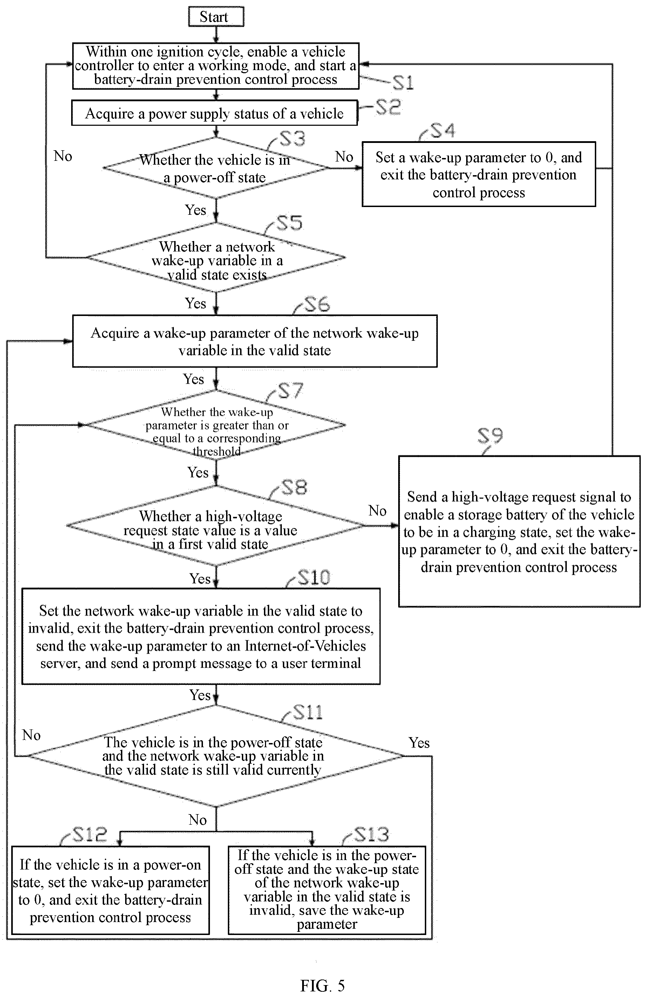

Referring to FIG. 5, after the vehicle controller enters the local mode and starts the anti-battery drain control process based on step S1, whether the vehicle is in the power-off state can be confirmed based on step S2 and step S3. If, within the ignition cycle, it is determined based on step S3 that the vehicle is in the power-on state, then based on step S4, the wake-up parameter of the network wake-up variable can be set to 0 and the anti-battery drain control process can be exited, and the process returns to step S1 to await the next ignition cycle. If, within the ignition cycle, it is determined based on step S3 that the vehicle is in the power-off state, then the wake-up parameter of the network wake-up variable in the valid state can be acquired based on step S5 and step S6. If it is determined based on step S7 that the wake-up parameter is greater than or equal to the corresponding threshold, whether the high-voltage request state value of the network wake-up variable in the valid state is the first target value can be determined based on step S8. If the high-voltage request state value of the network wake-up variable in the valid state is not the first target value, step S9 can be performed and the process returns to step S11 to await the next ignition cycle. If it is determined based on step S7 that the wake-up parameter is less than the corresponding threshold, or based on step S8 that the high-voltage request state value is the first target value, steps S10 and S11 can be performed in sequence. If it is determined based on step S11 that the vehicle is still in the power-off state and the network wake-up variable in the valid state is currently still in the valid state, the process can return to step S6 to continue acquiring the wake-up parameter; if it is determined based on step S11 that the vehicle is in the power-off state and the network wake-up variable in the valid state changes to the invalid state, it indicates that the ignition cycle does not end, so that step S13 can be performed to save the wake-up parameter of the network wake-up variable in the valid state, until the wake-up source corresponding to the network wake-up variable in the valid state is triggered again within the ignition cycle, so as to continue acquiring the wake-up parameter of the network wake-up variable in the valid state within the ignition cycle based on the saved wake-up parameter; and if it is determined based on step S11 that the vehicle is in the power-on state, it indicates that the ignition cycle ends, so that step S12 can be performed to exit the anti-battery drain control process, and the wake-up parameter can be set to 0, so as to ensure that the correct wake-up parameter can be obtained when the next ignition cycle arrives.

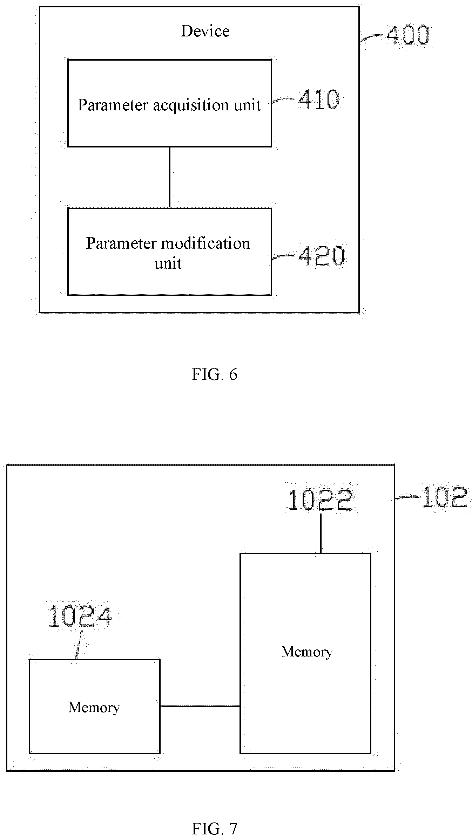

Referring to FIG. 6, a control device 400 is provided in the present application, including:
a parameter acquisition unit 410, configured to determine, when a vehicle is in a power-off state, by a vehicle controller, whether network wake-up variables are in valid states, and record a wake-up parameter corresponding to a network wake-up variable in a valid state, where the wake-up parameter comprises at least one of total wake-up duration or a total wake-up count; and
a parameter modification unit 420, configured to set the network wake-up variable in the valid state to an invalid state if the wake-up parameter of the network wake-up variable in the valid state is greater than or equal to a corresponding threshold, so that the vehicle controller does not respond to a wake-up from the network wake-up variable in the invalid state.

As an approach, the wake-up parameter includes the total wake-up count. The parameter acquisition unit 410 is specifically configured to switch the vehicle controller from the invalid state to the valid state in response to the network wake-up variables when the vehicle is in the power-off state within one ignition cycle, and add 1 to the total wake-up count of the network wake-up variable in the valid state, where the total wake-up count is not changed during a period in which the current valid state is maintained.

Optionally, the parameter modification unit 420 is specifically configured to: if the total wake-up count is less than a first threshold, confirm whether the network wake-up variable in the valid state is currently still in the valid state, and confirm whether the vehicle is currently in the power-off state; if the vehicle is currently in a power-on state, set the total wake-up count to 0; and if the vehicle is currently in the power-off state and the network wake-up variable in the valid state is currently in the invalid state, save the total wake-up count.

As another approach, the wake-up parameter includes the total wake-up duration. The parameter acquisition unit 410 is specifically configured to: within one ignition cycle, when the vehicle is in the power-off state, determine, by the vehicle controller, whether the network wake-up variables are in the valid states, and when confirming that the network wake-up variable in the valid state exists, start timing to acquire current wake-up duration of the network wake-up variable in the valid state within the ignition cycle, where the current wake-up duration is duration for which the network wake-up variable remains in the valid state; and based on initial wake-up duration and the current wake-up duration, obtain the total wake-up duration, where the initial wake-up duration is total wake-up duration when the vehicle controller last received a wake-up request from the network wake-up variable in the valid state within the ignition cycle.

Optionally, the parameter modification unit 420 is specifically configured to: if the total wake-up count is less than a second threshold, confirm whether the network wake-up variable in the valid state is currently still in the valid state currently, and confirm whether the vehicle is currently in the power-off state; if the vehicle is currently in the power-on state, stop timing, and set the total wake-up duration to 0; and if the vehicle is currently in the power-off state and the network wake-up variable in the valid state is currently in the invalid state, stop timing, and set the total wake-up duration as the initial wake-up duration within the ignition cycle.

As an approach, the parameter modification unit 420 is specifically configured to: if the wake-up parameter is greater than or equal to the corresponding threshold, acquire a high-voltage request state value of the network wake-up variable in the valid state; if the high-voltage request state value is a first target value, set the network wake-up variable in the valid state to the invalid state; and if the high-voltage request state value is a second target value, send a high-voltage request signal to enable a storage battery of the vehicle to be in a charging state, and set the wake-up parameter to 0.

Optionally, the parameter modification unit 420 is specifically configured to send an identifier and the wake-up parameter of the network wake-up variable in the valid state to an Internet-of-Vehicles server, and send a prompt message to a user terminal, where the prompt message is used to inform a user that the network wake-up variable is abnormal.

As an approach, the state acquisition unit 410 is specifically configured to acquire, by the vehicle controller, a power supply status of the vehicle in response to the vehicle controller being in a working mode within one ignition cycle. The parameter modification unit 420 is specifically configured to set the wake-up parameter to 0 if the vehicle is in the power-on state within the ignition cycle.

A vehicle provided in the present application is described below with reference to FIG. 7.

Referring to FIG. 7, based on the control method and device as above, another vehicle 100 capable of performing the aforementioned control method is further provided in an embodiment of the present application. The vehicle 100 includes a vehicle controller 102.

The vehicle controller 102 includes a processor 1022 and a memory 1024, where the memory 1024 stores a program capable of performing the contents in the aforementioned embodiment, and the processor 1022 can execute the program stored in the memory 1024.

The processor 1022 may include one or more processing cores. The processor 1022 connects various parts in the entire vehicle controller 102 by using various interfaces and lines, and performs, by running or executing instructions, programs, code sets or instruction sets stored in the memory 1024 and calling data stored in the memory 1024, various functions of the vehicle 100 and processes the data. Optionally, the processor 1022 may be implemented in at least one hardware form of a neural network processing unit (NPU), digital signal processing (DSP), a field-programmable gate array (FPGA), or a programmable logic array (PLA). The processor 1022 may integrate one or a combination of a central processing unit (CPU), a graphics processing unit (GPU), a neural network processing unit (NPU), and a modem. The CPU mainly processes an operating system, a user interface, and applications; the GPU is responsible for rendering and drawing display contents; the NPU is responsible for processing multimedia data such as videos and images; and the modem is configured to process wireless communication. It can be understood that the above-mentioned modem may also not be integrated into the processor 1022, but instead implemented separately through a communication chip.

The memory 1024 may include a random access memory (RAM), a read-only memory, and a double data rate (DDR) synchronous dynamic random access memory. The memory 1024 can be configured to store instructions, programs, codes, code sets, or instruction sets. The memory 1024 may include a program storage area and a data storage area, where the program storage area can store instructions for implementing the operating system, instructions for implementing at least one function (such as a touch function, an audio playback function, and an image playback function), and instructions for implementing the following method embodiments. The data storage area may also store data (such as phonebooks, audio and video data, and chat record data) created by the vehicle controller 102 during use.

A computer-readable storage medium 800 is provided in an embodiment of the present application. The computer-readable storage medium 800 stores program codes, which can be called by a processor to perform the method described in the above method embodiment.

The computer-readable storage medium 800 may be an electronic memory such as a flash memory, an electrically erasable programmable read-only memory (EEPROM), an EPROM, a hard disk, or an ROM. Optionally, the computer-readable storage medium 800 includes a non-transitory computer-readable storage medium. The computer-readable storage medium 800 has a storage space for the program codes 810 that perform any method step in the above method. These program codes can be read from or written into one or more computer program products. The program codes 810 may be compressed, for example, in a suitable form.

In summary, according to the control method and device, and the vehicle provided in the present application, when the vehicle is in the power-off state, the vehicle controller can determine whether the network wake-up variables are in the valid states, and record at least one wake-up parameter in the corresponding total wake-up duration or total wake-up count of the network wake-up variable in the valid state, and if the wake-up parameter of the network wake-up variable in the valid state is greater than or equal to the corresponding threshold, the network wake-up variable in the valid state is set to the invalid state, so that the vehicle controller does not respond to the wake-up from the network wake-up variable in the invalid state. In the above way, when the wake-up parameter of the network wake-up variable in the valid state is greater than or equal to the corresponding threshold, the network wake-up variable in the valid state can be set to the invalid state, so that the vehicle controller no longer responds to the network wake-up variable in the valid state. When the wake-up parameter of the network wake-up variable in the valid state is greater than or equal to the corresponding threshold, it may indicate an abnormal operation by a vehicle owner/a pedestrian, and a software exception, a mechanical failure or the like of the vehicle controller. Therefore, preventing the vehicle controller from responding to the network wake-up variable in the valid state can reduce the number of abnormal wake-ups of the vehicle controller, thereby reducing power consumption when the vehicle is in the power-off state, and improving the anti-battery-drain capability of the vehicle in the scenarios such as the abnormal operation by the vehicle owner/the pedestrian, and the software exception, the mechanical failure or the like of the vehicle controller. Moreover, each vehicle controller can perform relevant control based on the states of its own network wake-up variables, thereby improving control flexibility.

Finally, it should be noted that the above embodiments are provided merely to illustrate the technical solutions of the present application and not to limit them. Although the present application has been described in detail with reference to the aforementioned embodiments, those of ordinary skill in the art should understand that they can still make modifications on the technical solutions described in the aforementioned embodiments or make equivalent replacements on some of the technical features; and these modifications or replacements do not make the essence of the corresponding technical solutions depart from the spirit and scope of the technical solutions of the various embodiments of the present application.

## Claims

1. A control method, **characterized by** comprising:
determining, when a vehicle is in a power-off state, by a vehicle controller, whether network wake-up variables are in valid states, and recording a wake-up parameter corresponding to a network wake-up variable in a valid state, wherein the wake-up parameter comprises at least one of total wake-up duration or a total wake-up count; and
if the wake-up parameter of the network wake-up variable in the valid state is greater than or equal to a corresponding threshold, setting the network wake-up variable in the valid state to an invalid state, so that the vehicle controller does not respond to a wake-up from the network wake-up variable in the invalid state.

2. The method according to claim 1, **characterized in that** the wake-up parameter comprises the total wake-up count, and the determining, when a vehicle is in a power-off state, by a vehicle controller, whether network wake-up variables are in valid states, and recording a wake-up parameter corresponding to a network wake-up variable in a valid state comprises:
within one ignition cycle, when the vehicle is in the power-off state, switching the vehicle controller from the invalid state to the valid state in response to the network wake-up variables, and adding 1 to the total wake-up count of the network wake-up variable in the valid state, wherein the total wake-up count is not changed during a period in which the current valid state is maintained.

3. The method according to claim 2, **characterized by** further comprising:
if the total wake-up count is less than a first threshold, confirming whether the network wake-up variable in the valid state is currently still in the valid state, and confirming whether the vehicle is currently in the power-off state;
if the vehicle is currently in a power-on state, setting the total wake-up count to 0; and
if the vehicle is currently in the power-off state and the network wake-up variable in the valid state is currently in the invalid state, saving the total wake-up count.

4. The method according to claim 1, **characterized in that** the wake-up parameter comprises the total wake-up duration, and the determining, when a vehicle is in a power-off state, by a vehicle controller, whether network wake-up variables are in valid states, and recording a wake-up parameter corresponding to a network wake-up variable in a valid state comprises:
within one ignition cycle, when the vehicle is in the power-off state, determining, by the vehicle controller, whether the network wake-up variables are in the valid states, and when confirming that the network wake-up variable in the valid state exists, starting timing to acquire current wake-up duration of the network wake-up variable in the valid state within the ignition cycle, wherein the current wake-up duration is duration for which the network wake-up variable remains in the valid state; and
based on initial wake-up duration and the current wake-up duration, obtaining the total wake-up duration, wherein the initial wake-up duration is total wake-up duration when the vehicle controller last received a wake-up request from the network wake-up variable in the valid state within the ignition cycle.

5. The method according to claim 4, **characterized by** further comprising:
if the total wake-up duration is less than a second threshold, confirming whether the network wake-up variable in the valid state is currently still in the valid state, and confirming whether the vehicle is currently in the power-off state;
if the vehicle is currently in a power-on state, stopping timing, and setting the total wake-up duration to 0; and
if the vehicle is currently in the power-off state and the network wake-up variable in the valid state is currently in the invalid state, stopping timing, and setting the total wake-up duration as the initial wake-up duration within the ignition cycle.

6. The method according to claim 1, **characterized in that** the setting the network wake-up variable in the valid state to an invalid state if the wake-up parameter of the network wake-up variable in the valid state is greater than or equal to a corresponding threshold comprises:
if the wake-up parameter is greater than or equal to the corresponding threshold, acquiring a high-voltage request state value of the network wake-up variable in the valid state;
setting the network wake-up variable in the valid state to the invalid state if the high-voltage request state value is a first target value; and
if the high-voltage request state value is a second target value, sending a high-voltage request signal to enable a storage battery of the vehicle to be in a charging state, and setting the wake-up parameter to 0.

7. The method according to claim 6, **characterized in that** after setting the network wake-up variable in the valid state to the invalid state if the high-voltage request state value is a first target value, the method further comprises:
sending an identifier and the wake-up parameter of the network wake-up variable in the valid state to an Internet-of-Vehicles server, and sending a prompt message to a user terminal, wherein the prompt message is used to inform a user that the network wake-up variable in the valid state is abnormal.

8. A control device, **characterized by** comprising:
a parameter acquisition unit, configured to determine, when a vehicle is in a power-off state, by a vehicle controller, whether network wake-up variables are in valid states, and record a wake-up parameter corresponding to a network wake-up variable in a valid state, wherein the wake-up parameter comprises at least one of total wake-up duration or a total wake-up count; and
a parameter modification unit, configured to set the network wake-up variable in the valid state to an invalid state if the wake-up parameter of the network wake-up variable in the valid state is greater than or equal to a corresponding threshold, so that the vehicle controller does not respond to a wake-up from the network wake-up variable in the invalid state.

9. A vehicle controller, **characterized by** comprising a processor and a memory, wherein
one or more programs are stored in the memory and configured to be executed by the processor, and the one or more programs are configured to perform the method according to any one of claims 1 to 7.

10. A vehicle, **characterized by** comprising one or more vehicle controllers according to claim 9.

11. A computer-readable storage medium, **characterized by** storing program codes, wherein the method according to any one of claims 1 to 7 is performed when the program codes are executed.
